Europäisches Patentamt

(19) European Patent Office

Office européen des brevets

(11) Publication number : **0 333 747 B1**

# EUROPEAN PATENT SPECIFICATION

(45) Date of publication of patent specification :
**15.04.92 Bulletin 92/16**

(51) Int. Cl.[5] : **A01N 31/02**

(21) Application number : **87907915.0**

(22) Date of filing : **25.11.87**

(86) International application number :
**PCT/AU87/00396**

(87) International publication number :
**WO 88/03755 02.06.88 Gazette 88/12**

(54) **IMPROVED PHEROMONE FORMULATION.**

(30) Priority : **25.11.86 AU 9148/86**

(43) Date of publication of application :
**27.09.89 Bulletin 89/39**

(45) Publication of the grant of the patent :
**15.04.92 Bulletin 92/16**

(84) Designated Contracting States :
**AT BE CH DE FR GB IT LI LU NL SE**

(56) References cited :
**AU-B- 461 516**
**Journal of Chemical Ecology, Vol. 8 No.2(1982) p. 397-408, "Compounds Modifying the Activity of Two Sex Attractants for Males of the Pea Moth Cydia nigricana (F.)"**
**Chemical Abstracts, Volume 104, no. 23, issued 1986 June 9 (Columbus, Ohio, U.S.A.) Einhorn, J. et al. "Secondary components of the codling moth (Cydia pomella L.) (Lepidoptera,Tortricidae) sex pheromone II.First results on the behavioural effects." see monograph 202262p, C.R. Acad. Sci., Ser. 3, 1986, 302(7), 263-6 (Fr.)**

(56) References cited :
**Chemical Abstracts, Volume 102, no. 15, issued 1985 April 15 (Columbus, Ohio, U.S.A.) Einhorn J. et al.. "Secondary constituents of the codling moth(Cydia pomonella L.) (Leidopters, Tortricidae) sex pheromone" see monograph 129143c, C.R. Acad. Sci., Ser. 3, 1984, 299(19), 773-8 (Fr.)**
**Experimentia, Vol. 41 no. 11 (1985) 1482-4 (Arn, H., Guerin, P.M. et al) "Sex pheromone blend of the codling moth Cydia pomonella : Evidence for a behavioral role of dodecan-1-ol"**

(73) Proprietor : **THE COMMONWEALTH SCIENTIFIC AND INDUSTRIAL RESEARCH ORGANIZATION**
**Limestone Avenue, P.O. Box 1600**
**Canberra, Australian Capital Territory 2601 (AU)**

(72) Inventor : **ROTHSCHILD, George, Heinrich, Ludwig**
**Gwaiwunda Yass River Road**
**Gundaroo, NSW 2620 (AU)**
Inventor : **WHITTLE, Christopher, Playford**
**9 Whitham Place**
**Pearce, ACT 2607 (AU)**
Inventor : **BELLAS, Thomas, Edward**
**6 Coates Place**
**Weston, ACT 2611 (AU)**
Inventor : **VICKERS, Richard, Alan**
**17 Beaurepaire Crescent**
**Holt, ACT 2615 (AU)**

(74) Representative : **Sexton, Jane Helen et al**
**J.A. Kemp & Co. 14 South Square Gray's Inn**
**London WC1R 5LX (GB)**

## Description

This invention relates to an improvement in the formulation of a synthetic sex pheromone composition used for the control of the codling moth (Cydia pomonella), a major pest of apples and pears, by means of mating disruption.

Pheromones are chemicals secreted by an insect to affect the behaviour of other insects of the same species. Pheromones have been used in a number of biological pest control methods, and the use of these natural substances is attractive because of the high selectivity of these substances, combined with the fact that insects may be less likely to develop a resistance to them than, for example, to synthetic organic insecticides.

Sex pheromones, and particularly female sex pheromones, have been used for some time in insect control methods, and in one such method the female sex pheromone is used as "bait" in traps used to attract and catch male insects. In another such method, the female sex pheromone is evaporated from a number of sources to confuse the male insects and frustrate their attempts to locate females, hence disrupting mating.

Previous approaches to control codling moth by mating disruption have been based on the use of a single synthetic compound, trans, trans-8,10, dodecadien-1-o1 (E,E,8,10-120H), which is known to be the major component of the natural sex pheromone of the female codling moth. However, treatments with synthetic E,E,8,10-120H have provided very variable results in terms of levels of codling moth damage to fruit such as apples or pears, although the single component generally reduces the number of male codling moths locating virgin demale or synthetic pheromone sources.

It has now been discovered that the natural sex pheromone of codling moth females contains several other components in addition to E,E,8,10-120H which, when formulated with synthetic E,E,8,10-120H, provide a synthetic pheromone composition that is significantly more effective than E,E,8,10-120H alone in mating disruption trials in codling moth, both in reducing male captures at synthetic pheromone sources and in terms of reduced fruit damage.

According to a first aspect of the present invention, there is provided a synthetic pheromone composition for use in the control of the codling moth (Cydia pomonella), which comprises (1) trans, trans-8,10, dodecadien -1-o1, (2) at least one additional component selected from dodecanol and/or tetradecanol, and, optionally (3) a carrier material or substance therefor.

In another aspect, the present invention provides a method for the control of the codling moth (Cydia pomonella) in a crop or orchard, which comprises the step of releasing in the crop or orchard an effective amount of a composition comprising (1) trans, trans-8,10, dodecadien-1-ol, and (2) at least one additional component selected from dodecanol and/or tetradecanol, and, optionally (3) a carrier material or substance therefor.

The amount of the composition of this invention which is effective in the control of the codling moth by mating disruption can, or course, be readily determined by simple field trials. By way of example, however, the release of the composition at a rate to maintain the active components at or above 25mg per hectare of crop or orchard treated per hour, has been found to be effective. A preferred rate of release is about 35 mg per hectare treated per hour.

Preferably, the composition of this invention comprises the three active components, E,E,8,10-120H (component I), dodecanol (component II) and tetradecanol (component III).

As previously described, the composition optionally includes a carrier material or substance. One suitable carrier material is octanol, which may be included in the composition in order to reduce the melting point of the active components.

The composition may also contain an antioxidant, such as alpha-tocopherol, which may be used in an amount of approximately 10% by weight of the total composition.

Preferably also, the composition of this invention is provided in and released from vapor-releasing dispensers which can be distributed at appropriate points throughout the crop or orchard to be treated. Suitable dispensers include the polymeric tubular vapor-releasing dispensers having shape retainability disclosed in Australian Patent Specification No.534,192.

Preferably also, the ratios of the three components, released from vapor-releasing dispensers, are 1.0:0.5:0.1 for components I, II and III, respectively. As described above, the combined mean release rate for the three components over the season is preferably maintained at or above 25mg per hectare per hour - for example, using 1000 polymeric tubular vapor-releasing dispensers, each loaded with ca. 80mg, per hectare. The number of dispensers per hectare can, of course, be varied provided that the overall release rate is maintained at an appropriate level.

Whilst the preferred ratios of the three components for biological effectiveness are as described above, the dodecanol and/or tetradecanol may be included in the initial composition in amounts which exceed the optimum for biological effectiveness. This is to counteract the effect of differences between the initial composition and effluvia when dispensed, for example by permeation from a dispenser such as the capillary dispenser

2

of Australian Patent Specification No.534,192.

Further features of the present invention will be apparent from the following Examples, included by way of illustration of the invention.

Example 1

In a field trial comparing the effectiveness of the single component (A) versus the 3-component blend (B) and untreated control (C), each of the trial compositions was released from polymeric tubular dispensers as described in Australian Patent Specification No.534,192. The level of fruit damage in (B) was significantly lower (<0% fruit damaged) than (A) or (C) which exceeded 19% and 80% respectively. Mean male codling moth captures per pheromone baited trap over a three month period in (B), (A) and (C) were 0, 6 and 28, respectively. The 3-component blend in accordance with the present invention was therefore significantly more effective than either the single component or the control, both in reducing fruit damage and in reducing male captures at the synthetic pheromone sources.

The field results were supported by laboratory bioassays in which the sexual activity of male codling moths was measured in response to trans, trans-8, 10, dodecadien-1-ol (I) alone or in combination with dodecanol (II) and tetradecanol (III). The percent response was as follows I alone -27%, I plus II-22%, I plus III-23%, I plus II and III-63%. There was no response to the control (clean air).

Example 2

A three component pheromone blend in a slow release dispenser was tried at commercial pear orchards in the Goulburn Valley in Victoria, Australia.

The Trial Design

Each trial consisted of a paired comparison between a conventionally treated orchard and a pheromone treated orchard. An adjoining block of pears of the same variety but with conventional spray programme was monitored as the control at each site. The trial sites were not well isolated (desirable for pheromone trials) but where pheromone and conventionally treated orchards adjoined each other, the pheromone dispensers were placed in 6 rows of the conventionally treated orchard to provide a buffer zone of an effectively doubly treated area. A conventional fungicide programme was maintained on both test and control orchards.

a. Pheromone dispenser design

The pheromone mixture consisted of a blend of three components as follows:

| Compound | Proportion |
|---|---|
| E,E,8,10-12OH | 1000 |
| Dodecanol | 500 |
| Tetradecanol | 100 |

The above mixture was combined in a 90:10 w/w ratio with alpha tocopherol as an antioxidant, drawn into the capillary dispenser tube under vacuum and sealed and guillotined into 200 mm lengths. The dispensers were constructed in accordance with Australian Patent Specification No.534,192 and were comprised of a blend of polyethylene and ethylene/vinyl alcohol which allows the pheromone to release by slow permeation of the dispenser walls. A soft aluminium wire was incorporated into the dispenser beside the capillary to facilitate attachment to the branches of the trees. The capillary lumen was 2 mm and the capillary wall thickness was 0.5 mm.

b. Spray Programmes - Control orchards:

| Insecticide | No. of Applications | |
| --- | --- | --- |
| | Site 1 | Site 2 |
| Chlorpyriphos | – | 1 |
| Azinphos methyl | – | 3 |
| Parathion | 10 | 1 |
| Bacillus thuringiensis | 2 | 3 |

c. Dispenser placement

The dispensers were placed 4 per tree at a height of approximately 2 metres on the perimeter branches of the trees. This gave an overall density of 1000 dispensers per hectare. The dispensers were placed in the field at a date estimated to be one to two weeks prior to Coding moth emergence based on previous years experience.

d. Monitoring

All the treatment and control areas were monitored using Terpinyl acetate/sugar lures and pheromone traps. Coding moth damage was assessed at harvest.

e. Results

Coding moth populations were low, as expected in a normal commercially run orchard.

Coding Moth Damage

| Site | Treatment | No. of fruit checked | No. of fruit infested | Damage % |
| --- | --- | --- | --- | --- |
| 1 | Control | 600 | 1 | 0.5 |
| | Test | 400 | 0 | 0 |
| 2 | Control | 500 | 2 | 0.4 |
| | Test | 1000 | 3 | 0.3 |

It will be appreciated that modifications and variations may be made to the particular embodiments specifically described without departing from the broad concepts of this invention as described herein, and that the present invention extends to all such modifications and variations which fall within the spirit and scope of the invention.

**Claims**

1. A synthetic pheromone composition for use in the control of the codling moth (Cydia pomonella), which comprises:
   (1) trans, trans - 8, 10, dodecadien-1-ol,
   (2) dodecanol,
   (3) tetradecanol, and, optionally,

(4) a carrier material or substance therefor.

2. A composition according to claim 1, wherein said components are in the ratio of 1.0 : 0.5 : 0.1, respectively.

3. A composition according to claim 1, further comprising an antioxidant.

4. A composition according to claim 3, wherein said antioxidant is alpha-tocopherol.

5. A composition according to claim 1, further comprising octanol.

6. A composition according to any one of claims 1 to 5, wherein said components are contained within a tubular polymeric vapor-releasing dispenser.

7. A method for the control of the codling moth (Cydia pomonella) in a crop or orchard, which comprises the steps of releasing in the crop or orchard an effective amount of a composition according to any one of claims 1 to 7.

8. A method according to claim 7, wherein said composition is released at a rate effective to maintain the active components at or above 25 mg per hectare per hour.

9. A method according to claim 8, wherein said composition is released at a rate effective to maintain the active components at about 35 mg per hectare per hour.

**Patentansprüche**

1. Synthetische Pheromon-Zusammensetzung zur Bekämpfung des Apfelwicklers (Cydia pomonella), welche enthält:

(1) Trans, trans - 8, 10 - Dodecadien-1-ol,

(2) Dodecanol,

(3) Tetradecanol, und, wahlweise,

(4) ein Trägermaterial oder eine dafür geeignete Substanz

2. Zusammensetzung gemäß Anspruch 1, worin die genannten Komponenten in einem Verhältnis von 1,0 : 0,5 : 0,1 vorliegen.

3. Zusammensetzung gemäß Anspruch 1, welche zusätzlich ein Antioxidationsmittel enthält.

4. Zusammensetzung gemäß Anspruch 3, worin das Antioxidationsmittel Ampha-Tocopherol ist.

5. Zusammensetzung gemäß Anspruch 1, welche zusätzlich Octanol enthält.

6. Zusammensetzung gemäß einem der Ansprüche 1 bis 5, worin die Komponenten innerhalb eines rohrförmigen polymeren Zerstäubers enthalten sind.

7. Verfahren zur Bekämpfung des Apfelwicklers (Cydia pomonella) in der Feldfrucht oder in der Obstplantage, welches den Schritt der Freisetzung einer wirksamen Menge der Zusammensetzung gemäß einem der Ansprüche 1 bis 6 in der Feldfrucht oder der Obstplantage umfaßt.

8. Verfahren gemäß Anspruch 7, bei dem die Zusammensetzung in einer solchen Rate freigesetzt wird, daß eine Rate der aktiven Komponenten bei oder über 25 mg pro Hektar je Stunde aufrechterhalten wird.

9. Verfahren gemäß Anspruch 8, bei dem die Zusammensetzung in einer solchen Rate freigesetzt wird, daß eine Rate der aktiven Komponenten bei oder über 35 mg pro Hektar je Stunde aufrechterhalten wird.

**Revendications**

1. Composition de phéromone synthétique à utiliser dans la lutte contre la pyrale des pommes (*Cydia pomonella*), qui comprend :

(1) du *trans,trans*-8,10-dodécadiène-1-ol,

(2) du dodécanol,

(3) du tétradécanol et, facultativement,

(4) une matière ou substance de support pour ceux-ci.

2. Composition selon la revendication 1, dans laquelle lesdits constituants sont dans le rapport de 1,0:0,5:0,1, respectivement.

3. Composition selon la revendication 1, comprenant de plus un antioxydant.

4. Composition selon la redendication 3, dans laquelle ledit antioxydant est l'alpha-tocophérol.

5. Composition selon la revendication 1, comprenant de plus de l'octanol.

6. Composition selon l'une quelconque des revendications 1 à 5, dans laquelle lesdits constituants sont contenus dans un distributeur polymère tubulaire à diffusion de vapeur.

7. Procédé de lutte contre la pyrale des pommes (*Cydia pomonella*) dans une culture ou un verger, qui comprend les étapes consistant à libérer dans la culture ou le verger une quantité efficace d'une composition selon l'une quelconque des revendications 1 à 6.

8. Procédé selon la revendication 7, dans lequel ladite composition est libérée à une allure efficace pour maintenir les constituants actifs à un taux de 25 mg ou plus par hectare et par heure.

9. Procédé selon la revendication 8, dans lequel ladite composition est libérée à une allure efficace pour maintenir les constituants actifs à un taux d'environ 35 mg par hectare et par heure.